(19) Europäisches Patentamt / European Patent Office / Office européen des brevets

(11) **EP 4 047 408 A1**

(12) **EUROPEAN PATENT APPLICATION**
published in accordance with Art. 153(4) EPC

(43) Date of publication:
**24.08.2022 Bulletin 2022/34**

(21) Application number: **20890703.0**

(22) Date of filing: **30.09.2020**

(51) International Patent Classification (IPC):
**G02B 21/36** (2006.01)     **G02B 7/36** (2021.01)
**G06T 5/00** (2006.01)

(52) Cooperative Patent Classification (CPC):
**G02B 7/36; G02B 21/36; G06T 5/00**

(86) International application number:
**PCT/JP2020/037068**

(87) International publication number:
**WO 2021/100328 (27.05.2021 Gazette 2021/21)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **22.11.2019 JP 2019211390**

(71) Applicant: **Sony Group Corporation
Tokyo 108-0075 (JP)**

(72) Inventor: **OSHIMA, Takuya
Tokyo 108-0075 (JP)**

(74) Representative: **D Young & Co LLP
120 Holborn
London EC1N 2DY (GB)**

(54) **IMAGE PROCESSING METHOD, IMAGE PROCESSING DEVICE, AND IMAGE PROCESSING SYSTEM**

(57)     The image processing method according to the present application includes: acquiring a medical image captured by an imaging apparatus; and determining an intensity of a filter to be applied to the medical image according to a degree of focusing of the medical image.

FIG.10

**Description**

Field

The present invention relates to an image processing method, an image processing apparatus, and an image processing system.

Background

There are a digital microscope apparatus and an image display apparatus that use a microscope apparatus for observing a cell tissue to capture an image of the cell tissue, save the image as a medical image, and perform a pathological diagnosis or the like using image data of the medical image. In the digital microscope apparatus, in order to observe the entire specimen, a small region that partitions a region including the specimen on a slide glass is imaged by a magnification imaging system, and a plurality of images for each small region are connected to create one enormous medical image.

AutoFocus (AF) is adopted as a focusing method in which the focus of the objective lens of the magnification imaging system is adjusted to the cell tissue to be imaged. For example, a focusing method has been proposed in which the focal position of the objective lens of the magnification imaging system is moved at predetermined intervals in the optical axis direction, imaging is performed at each movement position, and the position when an image having the highest contrast among the captured images is captured is detected as the focusing position (e.g., refer to Patent Literature 1). This type of focusing method is called "contrast AF".

The cell tissue image captured in this manner has relatively high focus accuracy, but is different in how the image appears, from an optical microscope image observed by a physician or other observers through an optical microscope.

Citation List

Patent Literature

Patent Literature 1: JP 2011-197283 A

Summary

Technical Problem

As described above, in the digital microscope apparatus, there is a demand for acquiring an image of a cell tissue with high quality, but a sufficient solution has not yet been achieved.

In view of the circumstances as described above, the present technique aims to provide a digital microscope apparatus capable of acquiring an image of a cell tissue with high quality, an imaging method and a program therefor.

Solution to Problem

The image processing method according to the present application includes: acquiring a medical image captured by an imaging apparatus; and determining an intensity of a filter to be applied to the medical image according to a degree of focusing of the medical image.

Brief Description of Drawings

FIG. 1 is a diagram illustrating an example of characteristics of a medical image according to an embodiment.
FIG. 2 is a diagram illustrating an example of characteristics of a slide according to the embodiment.
FIG. 3 is a diagram illustrating a configuration example of an image processing system according to the embodiment.
FIG. 4 is a diagram illustrating an example of a function indicating a blur feature amount according to the embodiment.
FIG. 5 is a diagram illustrating an example of a function indicating the inverse number of the blur feature amount according to the embodiment.
FIG. 6 is a diagram illustrating an example of a range of pixels for calculating the blur feature amount according to the embodiment.

FIG. 7 is a diagram illustrating an example of a focusing position according to the embodiment.
FIG. 8 is a diagram illustrating an example of a range of pixels for calculating the blur feature amount according to the embodiment.
FIG. 9 is a diagram illustrating a configuration example of an imaging apparatus according to the embodiment.
FIG. 10 is a diagram illustrating a configuration example of an image processing apparatus according to the embodiment.
FIG. 11 is a diagram illustrating an example of a medical image storage unit according to the embodiment.
FIG. 12 is a diagram illustrating an example of an enhancement filter storage unit according to the embodiment.
FIG. 13 is a flowchart illustrating an example of information processing according to the embodiment.
FIG. 14 is a diagram illustrating an example of an effect of an enhancement filter according to the embodiment.
FIG. 15 is a diagram illustrating an example of the effect of the enhancement filter according to the embodiment.
FIG. 16 is a hardware configuration diagram illustrating an example of a computer for implementing the function of the image processing apparatus.

Description of Embodiments

Modes (hereinafter referred to as "embodiments") for implementing an image processing method, an image processing apparatus and an image processing system according to the present application will be described below in detail with reference to the drawings. Note that the image processing method, the image processing apparatus, and the image processing system according to the present application are not limited to the embodiments. In each of the following embodiments, the same portions are denoted by the same reference signs, and redundant description will be omitted.
The present disclosure will be described in the following order of items.

1. Characteristics of Optical Microscope
2. Configuration of Image Processing System
3. Example of Information Processing
4. Processing Variations

    4-1. Tap Range
    4-2. Number of Layers
    4-3. Type of Filter
    4-4. Constituting Block with Plurality of Pixels
    4-5. Subject
    4-6. Imaging Apparatus
    4-7. Focusing Position
    4-8. Method of Calculating Feature Amount
    4-9. Integration of Apparatus

5. Configuration of Imaging Apparatus
6. Configuration of Image Processing Apparatus
7. Flow of Information Processing
8. Modifications
9. Hardware Configuration
10. Others

Embodiments

1. Characteristics of Optical Microscope

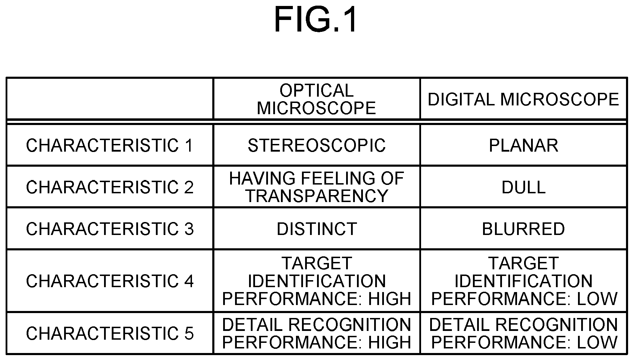

FIG. 1 illustrates characteristics of an optical microscope image. An optical microscope image has different characteristics from an image observed through a digital microscope apparatus. As illustrated in FIG. 1, there are several indices related to the image quality of an optical microscope image. The characteristics of the optical microscope image will be described using the indices illustrated in FIG. 1. For example, there is an index indicating the brightness of image quality (in the present embodiment, sometimes denoted as "feeling of glitter"). For example, there is an index indicating a degree of an edge of image quality (in the present embodiment, sometimes denoted as "feeling of distinctness"). In FIG. 1, the index indicating the characteristics of the optical microscope image is, for example, "stereoscopic/planar", "transparent/dull", or "distinct/blurred".
The blur (indistinctness) according to the embodiment indicates a state in which an image is not sharp. Specifically, the blur according to the embodiment indicates a state in which the image is out of focus and not sharp beyond the range of the depth of field. The focusing according to the embodiment indicates a state of focusing within the range of the depth of field. The degree of focusing according to the embodiment is a value obtained by scoring how much the focus is adjusted.

As illustrated in FIG. 1, the optical microscope image is stereoscopic. The term "stereoscopic" according to the embodiment indicates a quality related to visual contradistinction (contrast) between blur and focusing.

The optical microscope image has a feeling of transparency. The feeling of transparency according to the embodiment indicates a quality related to noise. The noise according to the embodiment is unnecessary information other than the subject. Specifically, since the optical microscope image is not digitized, there is no enhancement of noise, and the image has a feeling of transparency.

The optical microscope image has a feeling of glitter. The feeling of glitter according to the embodiment indicates a quality related to brightness caused by interference fringes generated by scattered light when the light is applied to the subject. Specifically, the optical microscope image emits a brighter light than the light that is applied to an object by interference fringes, and therefore has a feeling of glitter.

The optical microscope image has a feeling of distinctness. The feeling of distinctness according to the embodiment indicates a quality related to sharpness.

The optical microscope image is stereoscopic, bright, and highly sharp, and therefore has a high ability to identify a target (hereinafter appropriately referred to as "target identification performance").

The optical microscope image is stereoscopic, bright, and highly sharp, and therefore has a high ability to recognize a target (hereinafter appropriately referred to as "target recognition performance").

A method of approximating an image acquired by a digital microscope apparatus to an optical microscope image will be described below. A specimen is placed on a slide glass. In the specimen, cells and others are distributed in the Z-axis direction (hereinafter appropriately referred to as "Z direction"), which indicates the direction of the thickness of the slide, and the medical image acquired by the digital microscope apparatus has a mixture of a region in focus and a region not in focus. For example, when a high-range enhancement filter is applied to the entire medical image, the low-frequency portion (e.g., noise) is also enhanced, and the sharpness of the region not in focus is also improved. The image has many high-frequency components, and the target identification performance deteriorates. When the intensity of the filter is lowered, the enhancement of the region to be enhanced is also weakened.

The image approximated to the optical microscope image is an image having the characteristics illustrated in FIG. 1, and is an image formed by images having different degrees of focusing. The effect of approximating to the optical microscope image will be described below.

For example, approximating the medical image acquired by the digital microscope apparatus to the optical microscope image allows the structure of a cell to be easily seen. Thus, utilization for diagnosis can be promoted. For example, approximating the medical image to the optical microscope image allows the location of cells to be easily discriminated. Thus, the speed of diagnosis by a pathologist is increased and fatigue can be reduced. For example, approximating the medical image to the optical microscopic images increases the visibility of overlapping cells. Thus, the diagnosis of disease types in which identification of overlapping cells is important can be performed. For example, approximating the medical image to the optical microscopic image allows for a pathologist to easily adapt to diagnosis using the medical image. For example, approximating to the optical microscope image can prevent a small object such as Helicobacter pylori from being buried in noise. For example, approximating to an optical microscope image can secure high compression efficiency due to the region limiting enhancement.

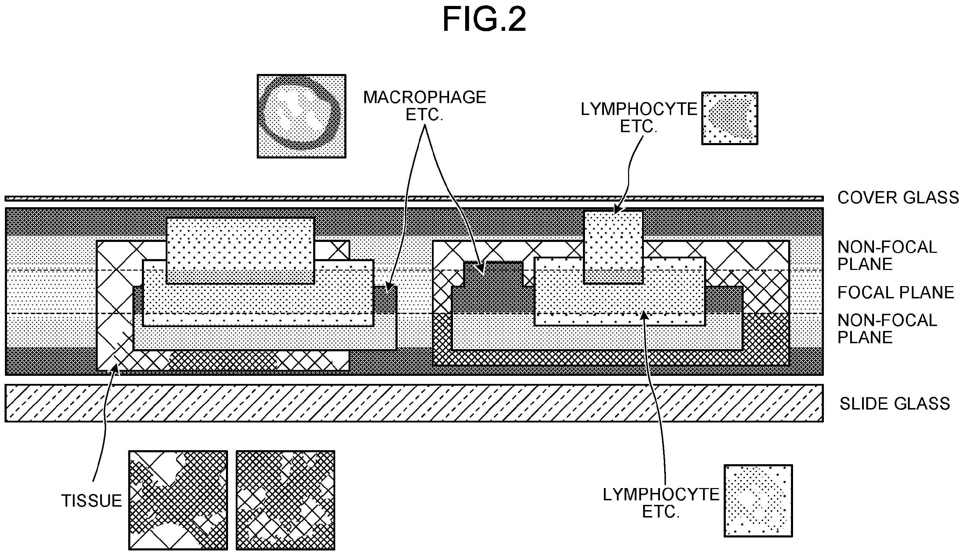

FIG. 2 illustrates an example of a slide for imaging. FIG. 2 is a view of the slide for imaging seen from the vertical direction. As illustrated in FIG. 2, the Z direction is the direction of the thickness of the slide. In other words, the Z direction is the direction of the thickness of the subject. Since the subject is imaged from above the slide glass, the Z direction is a direction perpendicular to the medical image. The Z direction is an optical axis direction at the time of imaging. FIG. 2 illustrates a case where a subject is placed on the slide glass and covered with a cover glass. FIG. 2 illustrates a case where the subject is a section of tissue. FIG. 2 illustrates a case where specimens such as lymphocytes and macrophages contained in tissue are imaged.

As illustrated in FIG. 2, lymphocytes are thick because the lymphocytes overlap. Beneath the lymphocytes are macrophages. Since the depth of field to be imaged is shallow, it is impossible to image, for example, the entire lymphocyte or macrophage in focus. Information processing by an image processing apparatus 100 will be described below as a process of correcting a decrease in visibility due to digitization.

2. Configuration of Image Processing System

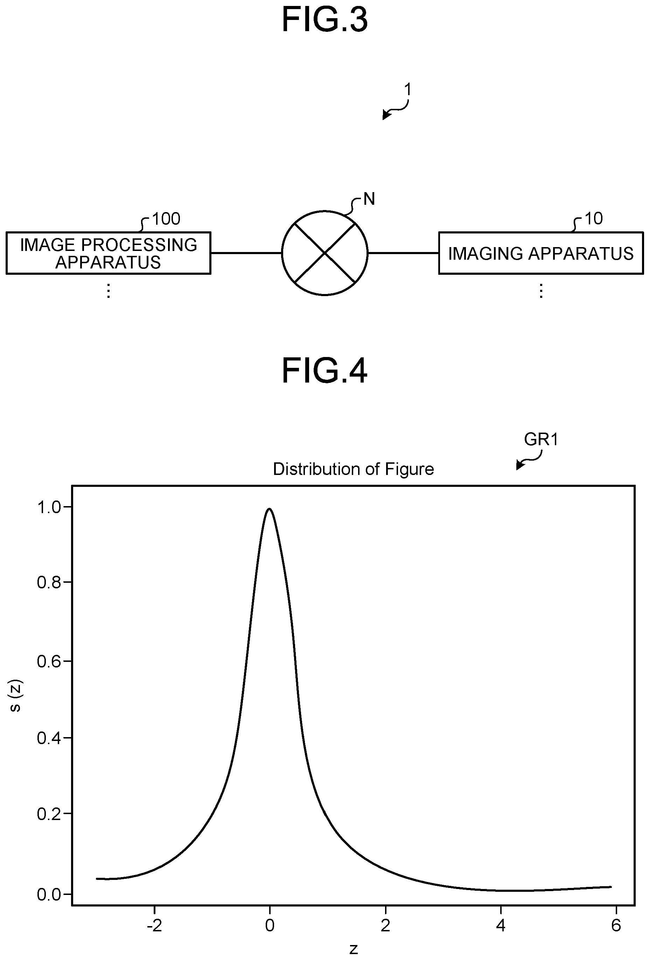

The configuration of an image processing system 1 will be described with reference to FIG. 3. FIG. 3 is a diagram illustrating a configuration example of the image processing system according to the embodiment. As illustrated in FIG. 3, the image processing system 1 includes an imaging apparatus 10 and the image processing apparatus 100.

The imaging apparatus 10 and the image processing apparatus 100 are connected via a predetermined communication network (network N) so as to be able to communicate with each other in a wired or wireless manner. FIG. 3 is a diagram illustrating a configuration example of the image processing system according to the embodiment. The image processing system 1 illustrated in FIG. 3 may include a plurality of imaging apparatuses 10 and a plurality of image processing apparatuses 100.

The imaging apparatus 10 is an imaging apparatus such as a microscope and is used for imaging a specimen.

The image processing apparatus 100 is used to determine information related to a filter according to the degree of focusing of a subject. The image processing apparatus 100 is, for example, an information processing apparatus such as a PC or a work station (WS), and performs processing based on information transmitted from, for example, the imaging apparatus 10 via the network N.

3. Example of Information Processing

A description will be given below of a case where the image processing apparatus 100 determines the intensity of the filter according to the degree of focusing of a subject. A specimen such as a cell will be described below as an example of a subject.

The filter according to the embodiment is a filter for improving the image quality of a medical image. The filter according to the embodiment is applied to a medical image obtained by imaging a subject. The filter according to the embodiment may be any type of filter. In other words, it is assumed that there is no limit to the region enhanced by the filter according to the embodiment. For example, the filter according to the embodiment includes filters such as a high-range enhancement filter, a mid-range enhancement filter, a low-range enhancement filter, a negative enhancement filter, that is, a smoothing filter.

The image processing apparatus 100 calculates the degree of focusing using a blur function (hereinafter appropriately referred to as "blur determination function" or "blur amount determination function"). A process in which the image processing apparatus 100 generates a blur function will be described below.

The blur function is generated by calculating an inverse number by approximating the sum of squared adjacent differences by a Lorentz function. The approximation according to the embodiment is fitting (curve fitting) of a graph. Expression (1) illustrates the sum of squared adjacent differences according to the embodiment.

$$s(z) = \sum_{i=1}^{n} \sum_{j=1}^{m} \left[ p_z(i, j) - p_z(i + d, j) \right]^2 \tag{1}$$

FIG. 4 illustrates a graph GR1 of the sum of squared adjacent differences. FIG. 4 illustrates a graph GR1 in which a total value of differences between a predetermined pixel and a pixel having a predetermined relationship with respect to all pixels in a medical image is used as a feature amount and a value in the Z direction (hereinafter appropriately referred to as a "Z value") is plotted as a variable. This feature amount is appropriately referred to as a "blur feature amount". A pixel having a predetermined relationship is a pixel adjacent to a predetermined pixel. In this case, FIG. 4 illustrates a graph in which a total value of differences between a predetermined pixel and an adjacent pixel is plotted for all pixels in the medical image. In FIG. 4, the horizontal axis (X-axis) of the graph GR1 is the Z value of the slide. The vertical axis (Y-axis) of the graph GR1 indicates the feature amount. In FIG. 4, an output value of the sum of squared adjacent differences is indicated by s(z). In FIG. 4, plotting is performed so that the Z value at which the feature amount becomes maximum becomes 0. In other words, plotting is performed so that the maximum value of the output values of the sum of squared adjacent differences is s(0). FIG. 4 illustrates that the greater the feature amount, the higher the degree of focusing.

FIG. 4 may illustrate a graph in which the sum of squared adjacent differences is approximated by a Lorentz function. Expression (2) illustrates the Lorentz function according to the embodiment.

$$f(z) = \frac{a}{b + (z - c)^2} \tag{2}$$

In this case, the Y-axis of the graph GR1 in FIG. 4 may be f(z). In other words, the Y-axis of the graph GR1 in FIG. 4 may be indicated by f(z) as an output value of the Lorentz function.

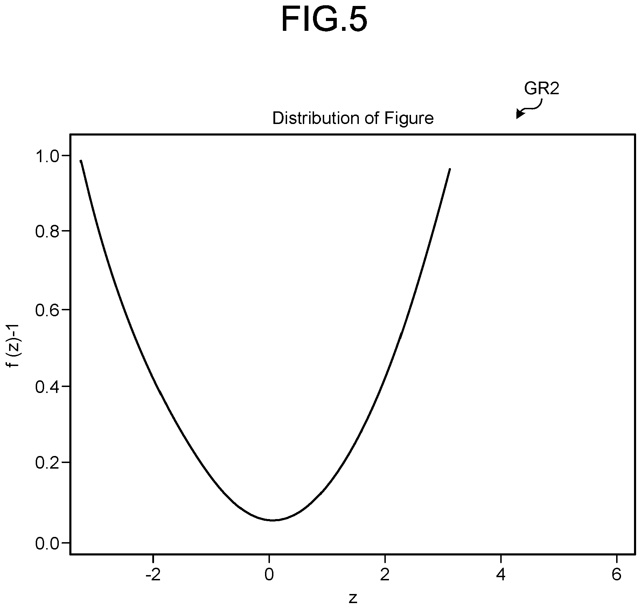

FIG. 5 illustrates a graph GR2 which is the inverse number of the Lorentz function f(z). FIG. 5 illustrates a graph GR2 obtained by plotting the inverse number of the Lorentz function f(z). The graph GR2 is a quadratic curve. Expression (3) illustrates a quadratic curve according to the embodiment.

$$f(z)^{-1} = \frac{b+(z-c)^2}{a} \tag{3}$$

The vertex in the graph GR2 indicates a focusing position. The focusing position according to the embodiment is a Z value at which the degree of focusing becomes maximum.

The image processing apparatus 100 acquires image information on a predetermined focused image. The image processing apparatus 100 acquires a predetermined number of pieces of image information including a predetermined focused image and an image focused on a position having different Z values using the predetermined focused image as a reference. For example, the image processing apparatus 100 acquires image information focused on a position different by several micrometers in the Z direction from the Z value of a predetermined focused image. As a specific example, the image processing apparatus 100 acquires three pieces in total of image information including a predetermined focused image and two images focused on positions different by several micrometers in the Z direction from the Z value of the predetermined focused image.

The image processing apparatus 100 calculates the blur feature amount of the acquired image information by using the sum of squared adjacent differences. Specifically, the image processing apparatus 100 calculates the blur feature amount of the acquired image information by approximating the sum of squared adjacent differences to a Lorentz function.

The image processing apparatus 100 calculates the inverse number of the calculated blur feature amount. The image processing apparatus 100 performs fitting to a quadratic curve based on the inverse number of the calculated blur feature amount. The image processing apparatus 100 estimates the focusing position based on the fitted quadratic curve. Specifically, the image processing apparatus 100 estimates the vertex of the fitted quadratic curve as the focusing position of the entire image.

The image processing apparatus 100 calculates the degree of focusing of the acquired image information based on the estimated focusing position. Specifically, the image processing apparatus 100 calculates the degree of focusing of the acquired image information based on the difference between the estimated focusing position and the Z value used for the blur function.

The image processing apparatus 100 determines the intensity of the filter according to the calculated degree of focusing.

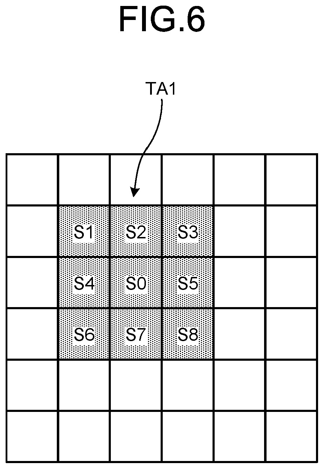

A process in which the image processing apparatus 100 calculates a blur feature amount will be described below with reference to FIG. 6.

The image processing apparatus 100 arranges a tap centered on a predetermined pixel using the predetermined pixel in the medical image as a reference, and calculates a blur feature amount by using the sum of squared adjacent differences. The tap according to the embodiment indicates a range of pixels centered on a predetermined pixel. In other words, the tap according to the embodiment indicates a range of peripheral pixels of a pixel of interest. For example, the tap according to the embodiment indicates a range of peripheral pixels of a pixel of interest to which a filter is applied. For example, a 3-by-3 tap indicates a range of nine pixels in total in which the vertical and horizontal pixels of the image are three pixels each. The image processing apparatus 100 arranges the same tap on each of images acquired at different Z values and calculates the sum of squared adjacent differences as a blur feature amount. FIG. 6 illustrates an example in which the image processing apparatus 100 arranges a 3-by-3 tap TA1. In FIG. 6, the image processing apparatus 100 calculates a blur feature amount centered on S0 using S0 as a predetermined pixel. In this case, the image processing apparatus 100 calculates a blur feature amount based on Expression (4).

$$\text{BLUR FEATURE AMOUNT (IN CASE OF 3 BY 3)} = (s_0 - s_1)^2 + (s_0 - s_2)^2 + (s_0 - s_3)^2 + (s_0 - s_4)^2$$
$$+ (s_0 - s_5)^2 + (s_0 - s_6)^2 + (s_0 - s_7)^2 + (s_0 - s_8)^2 \tag{4}$$

Specifically, when the image processing apparatus 100 acquires three pieces in total of image information including a predetermined focused image and two images focused on positions different in the Z direction from the Z value of the predetermined focused image, the image processing apparatus 100 arranges a 3-by-3 tap from each of the three pieces and calculates a blur feature amount by using the sum of squared adjacent differences from the center. In this case, the image processing apparatus 100 calculates a blur feature amount based on Expression (5).

$$\text{BLUR FEATURE AMOUNT } F_2 \text{ (UPPER)} = (s_0[2]-s_1[2])^2 + (s_0[2]-s_2[2])^2 + (s_0[2]-s_3[2])^2 +$$
$$(s_0[2]-s_4[2])^2 + (s_0[2]-s_5[2])^2 + (s_0[2]-s_6[2])^2 + (s_0[2]-s_7[2])^2 + (s_0[2]-s_8[2])^2$$

$$\text{BLUR FEATURE AMOUNT } F_1 \text{ (MIDDLE)} = (s_0[1]-s_1[1])^2 + (s_0[1]-s_2[1])^2 + (s_0[1]-s_3[1])^2 +$$
$$(s_0[1]-s_4[1])^2 + (s_0[1]-s_5[1])^2 + (s_0[1]-s_6[1])^2 + (s_0[1]-s_7[1])^2 + (s_0[1]-s_8[1])^2$$

$$\text{BLUR FEATURE AMOUNT } F_0 \text{ (LOWER)} = (s_0[0]-s_1[0])^2 + (s_0[0]-s_2[0])^2 + (s_0[0]-s_3[0])^2 +$$
$$(s_0[0]-s_4[0])^2 + (s_0[0]-s_5[0])^2 + (s_0[0]-s_6[0])^2 + (s_0[0]-s_7[0])^2 + (s_0[0]-s_8[0])^2$$

$$(5)$$

The image processing apparatus 100 calculates a blur feature amount by using image information on a layer positioned at a predetermined Z value among the acquired image information. For example, the image processing apparatus 100 calculates a blur feature amount F2 by using image information on an upper layer among the acquired three pieces of image information. For example, the image processing apparatus 100 calculates a blur feature amount F1 by using image information on a middle layer among the acquired three pieces of image information. For example, the image processing apparatus 100 calculates a blur feature amount F0 by using image information on a lower layer among the acquired three pieces of image information.

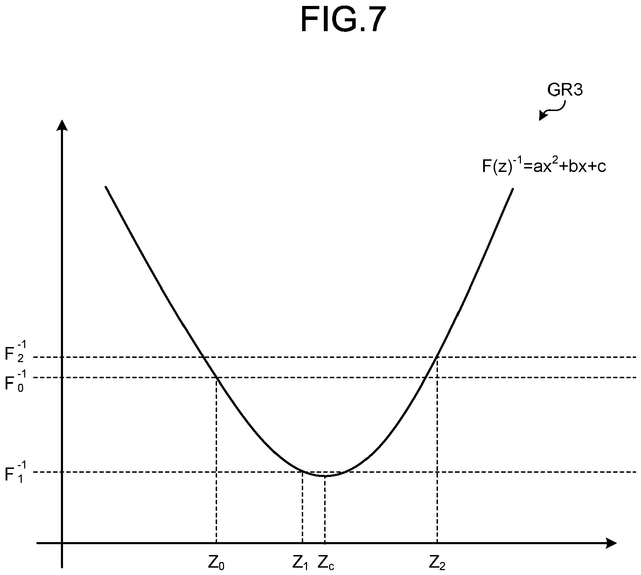

FIG. 7 illustrates a graph GR3 in which inverse numbers of three values calculated by the image processing apparatus 100 are fitted to a quadratic curve. The image processing apparatus 100 estimates the focusing position based on the fitting. The image processing apparatus 100 estimates a vertex of the fitted quadratic curve as a focusing position. In FIG. 7, Zc is the focusing position. In FIG. 7, Zc is the focusing position estimated by the blur feature amount. In FIG. 7, Z1 is the most focused position in the entire image. In FIG. 7, Z1 closest to Zc is the most focused position in the entire image. The image processing apparatus 100 may apply, to Z1, a filter having an intensity that is equivalent to a result obtained by applying a filter to be applied to Zc. The image processing apparatus 100 may apply a filter having an intensity equivalent to Zc to Z1 when Z1 is within a predetermined range regarded as equivalent to Zc.

The image processing apparatus 100 calculates the degree of focusing according to the distance from the focusing position. In FIG. 7, the image processing apparatus 100 calculates the degree of focusing according to the distance from Zc.

The image processing apparatus 100 determines the intensity of the filter to be applied according to the calculated degree of focusing. The image processing apparatus 100 applies a filter according to the determined intensity. Specifically, the image processing apparatus 100 determines the intensity of the filter for each pixel, and performs filter processing on the pixel. Thus, the image processing apparatus 100 performs filter processing most suitable for the image by repeating the processing for each pixel.

Thus, the image processing apparatus 100 can change the intensity of the filter according to the degree of focusing. Thus, the image processing apparatus 100 can apply a filter having an intensity equivalent to 100% only to the focused region of an image. Applying a filter having an intensity of 100% to the entire image also increases the sharpness of unfocused regions and noise. However, since the image processing apparatus 100 applies the filter only to the focused region, the sharpness is improved only in the focused region. Since the sharpness of the unfocused region is not enhanced, the depth feeling of the image is not lowered, and the overlapping of cells is easily recognized. Since the sharpness of the noise is not enhanced, it is possible to suppress a fine subject such as Helicobacter pylori from being buried in the noise. Thus, the image processing apparatus 100 can adjust local contrast. Thus, the image processing apparatus 100 can correct an image whose contrast is reduced by the imaging optical system. Thus, the image processing apparatus 100 can partially adjust contrast. Thus, the image processing apparatus 100 can confirm the situation even when mucus or others is mixed in the cell nucleus and gene information is not present in the center of the cell nucleus and improve the accuracy of diagnosis.

4. Processing Variations

4-1. Tap Range

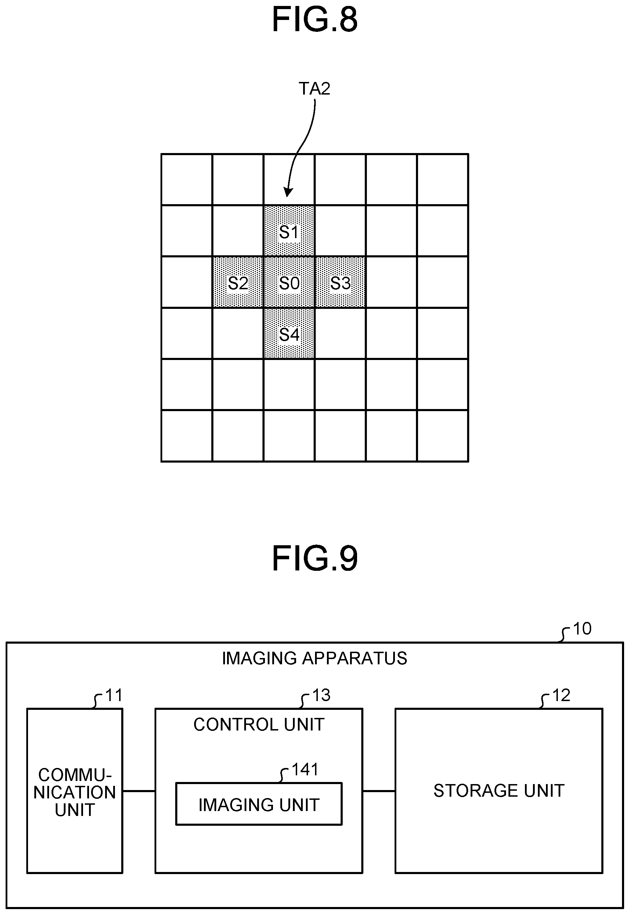

Although the image processing apparatus 100 selects a square tap centered on a predetermined pixel in the above-described example, the selected tap range is not limited to a square such as 3 by 3, and any range may be selected as the tap. For example, the image processing apparatus 100 may select a cross-shaped tap range centered on S0 as illustrated in FIG. 8. The number of vertical and horizontal pixels in the selected range may not be limited to three pixels. The image processing apparatus 100 may select, as a tap, a range of 11 by 11 in which each of vertical and horizontal pixels is 11 pixels.

4-2. Number of Layers

Although the image processing apparatus 100 estimates the focusing position by using the inverse number of three values calculated by using the three pieces of image information having different Z directions in the above-described example, it is assumed that the number of pieces of image information for estimating the focusing position is not limited as long as the number is three or more. For example, the image processing apparatus 100 may estimate the focusing position by using the inverse number of four values calculated by using four pieces of image information having different Z directions.

4-3. Type of Filter

Although the image processing apparatus 100 determines the intensity of the filter according to the degree of focusing in the above-described example, the image processing apparatus 100 may determine the type of the filter according to the degree of focusing. For example, the image processing apparatus 100 determines the type of filter according to the estimated focusing position. For example, if the degree of focusing satisfies a predetermined condition, the image processing apparatus 100 determines the type of the corresponding specific filter. For example, if the degree of focusing satisfies a predetermined condition, the image processing apparatus 100 determines a type of filter for enhancing a corresponding predetermined region. For example, if the degree of focusing is greater than or equal to a predetermined threshold value, the image processing apparatus 100 determines to apply the mid-range enhancement filter. For example, if the degree of focusing is smaller than a predetermined threshold value, the image processing apparatus 100 determines to apply the high-range enhancement filter. Alternatively, the image processing apparatus 100 determines to apply a negative enhancement filter, that is, a smoothing filter.

The image processing apparatus 100 may determine the intensity and type of the filter according to the degree of focusing. The image processing apparatus 100 may simultaneously determine both the intensity and the type of the filter according to the degree of focusing. In this case, the image processing apparatus 100 may apply the filter of the determined intensity and type to the medical image. Thus, the image processing apparatus 100 can apply an optimum filter with an optimum intensity according to the degree of focusing.

4-4. Constituting Block with Plurality of Pixels

Although the image processing apparatus 100 determines the intensity and type of the filter for each pixel in the above-described example, the image processing apparatus 100 may constitute a block with a plurality of pixels and determine the intensity and type of the filter for each block. In this case, the image processing apparatus 100 determines a plurality of pixels for constituting a block. The image processing apparatus 100 may determine a plurality of pixels for constituting a block in any manner. For example, the image processing apparatus 100 constitutes a block with a plurality of adjacent pixels. For example, the image processing apparatus 100 constitutes a block with a plurality of predetermined pixels.

4-5. Subject

Although the image processing apparatus 100 acquires a medical image using a specimen such as a cell as a subject in the above-described example, the image processing apparatus may acquire an image using an organism or any object collected from an organism as a subject. For example, the image processing apparatus 100 acquires an image using a specimen related to a living body, an organism, a material, a pathology or others in the medical field as a subject.

4-6. Imaging Apparatus

It is assumed that the imaging apparatus according to the embodiment may be any apparatus capable of imaging a subject. For example, the imaging apparatus according to the embodiment is a microscope. If the imaging apparatus according to the embodiment is a microscope, any microscope may be used.

4-7. Focusing Position

Although the image processing apparatus 100 estimates the vertex of the fitted quadratic curve as the focusing position of the entire image in the above-described example, the image processing apparatus may estimate a position within a predetermined range from the vertex of the fitted quadratic curve as the focusing position of the entire image.

4-8. Method of Calculating Feature Amount

Although pixels having a predetermined relationship are pixels adjacent to a predetermined pixel in the above embodiment, the pixels are not limited to this example. In other words, the pixels having the predetermined relationship are not necessarily limited to adjacent pixels. For example, the pixels having the predetermined relationship may be pixels every other pixel or every two pixels. For example, the image processing apparatus 100 may calculate the degree of focusing by using a total value of differences between a predetermined pixel and pixels every other pixel as the feature amount. In this case, the image processing apparatus 100 determines the intensity of the filter to be applied to the medical image according to the degree of focusing calculated by using a total value of differences between a predetermined pixel and pixels every other pixel as the feature amount.

4-9. Integration of Apparatus

Although the imaging apparatus 10 and the image processing apparatus 100 are separate apparatuses in the above embodiment, the imaging apparatus 10 and the image processing apparatus 100 may be integrated. For example, the functions of the image processing apparatus 100 may be implemented in a computer that controls the operation of the imaging apparatus 10, or may be implemented in any computer provided within the housing of the imaging apparatus 10. The functions of the image processing apparatus 100 may be downloaded to a computer that controls the operation of the imaging apparatus 10, or may be downloaded to any computer provided within the housing of the imaging apparatus 10. Thus, the imaging apparatus 10 having the function of the image processing apparatus 100 can be sold.

5. Configuration of Imaging Apparatus

The configuration of the imaging apparatus 10 according to the embodiment will then be described with reference to FIG. 9. FIG. 9 is a diagram illustrating the configuration example of the imaging apparatus 10 according to the embodiment. As illustrated in FIG. 9, the imaging apparatus 10 includes a communication unit 11, a storage unit 12, and a control unit 13. The imaging apparatus 10 may have an input unit (e.g., a keyboard or a mouse) for receiving various operations from an administrator of the imaging apparatus 10, and a display unit (e.g., a liquid crystal display) for displaying various types of information.

Communication Unit 11

The communication unit 11 is implemented, for example, by a network interface card (NIC). The communication unit 11 is connected to a predetermined network N in a wired or wireless manner, and transmits and receives information to and from, for example, the image processing apparatus 100 via the predetermined network N.

Storage Unit 12

The storage unit 12 is implemented by, for example, a semiconductor memory element such as a RAM or a flash memory, or a storage device such as a hard disk or an optical disk. The storage unit 12 stores information related to medical images. Specifically, the storage unit 12 stores information related to the medical image of the imaged subject.

Control Unit 13

The control unit 13 is a controller, and is implemented, for example, by a CPU or an MPU, by executing various programs stored in a storage device inside the imaging apparatus 10 using a RAM as a work area. The control unit 13 is a controller, and is implemented by, for example, an integrated circuit such as an ASIC or an FPGA.

As illustrated in FIG. 9, the control unit 13 includes an imaging unit 141, and implements or executes an operation of information processing to be described below. The internal configuration of the control unit 13 is not limited to the configuration illustrated in FIG. 9, and other configurations may be used as long as information processing to be described below is performed.

Imaging Unit 141

The imaging unit 141 images various types of information. The imaging unit 141 images a subject on a slide. The imaging unit 141 acquires various types of information. The imaging unit 141 acquires an imaged medical image.

6. Configuration of Image Processing Apparatus

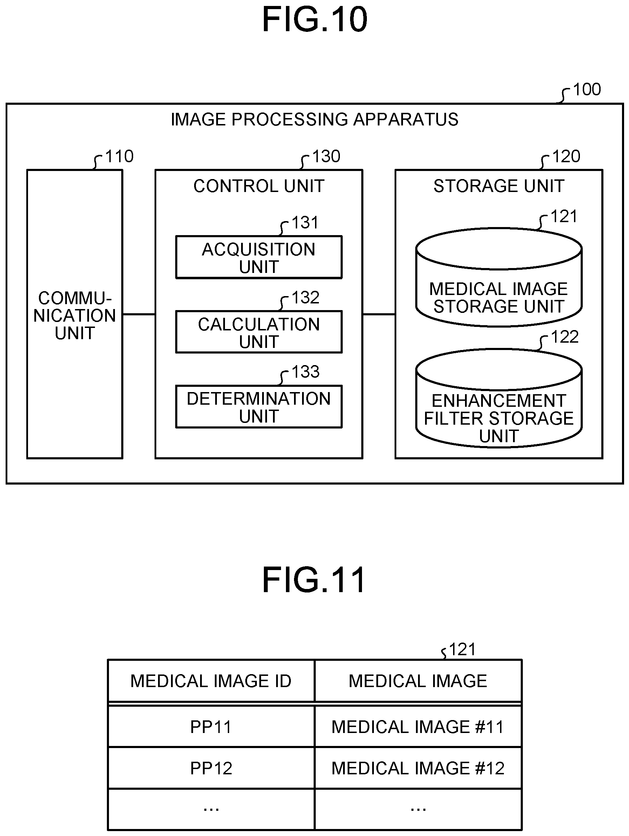

The configuration of the image processing apparatus 100 according to the embodiment will then be described with reference to FIG. 10. FIG. 10 is a diagram illustrating the configuration example of the image processing apparatus 100 according to the embodiment. As illustrated in FIG. 10, the image processing apparatus 100 includes a communication unit 110, a storage unit 120, and a control unit 130. The image processing apparatus 100 may have an input unit (e.g., a keyboard or a mouse) for receiving various operations from an administrator of the image processing apparatus 100, and a display unit (e.g., a liquid crystal display) for displaying various types of information.

Communication Unit 110

The communication unit 110 is implemented, for example, by the NIC. The communication unit 110 is connected to the network N in a wired or wireless manner, and transmits and receives information to and from, for example, the imaging apparatus 10 via the network N.

Storage Unit 120

The storage unit 120 is implemented by, for example, a semiconductor memory element such as a RAM or a flash memory, or a storage device such as a hard disk or an optical disk. As illustrated in FIG. 10, the storage unit 120 includes a medical image storage unit 121 and an enhancement filter storage unit 122.

The medical image storage unit 121 stores information related to medical images. FIG. 11 illustrates an example of the medical image storage unit 121 according to the embodiment. As illustrated in FIG. 11, the medical image storage unit 121 has items such as "medical image ID" and "medical image".

The "medical image ID" indicates identification information for identifying a medical image. The "medical image" indicates a medical image obtained by imaging a subject. For example, the "medical image" indicates a medical image captured by the imaging apparatus 10. Although conceptual information such as "medical image #11" and "medical image #12" is stored in the "medical image" in the example illustrated in FIG. 11, for example, a still image or a moving image is actually stored. The still image or the moving image may be saved in a server or a cloud different from the image processing apparatus, and the "medical image" may store, for example, a uniform resource locator (URL) in which the content of the medical image is located, or a file path name indicating the storage location.

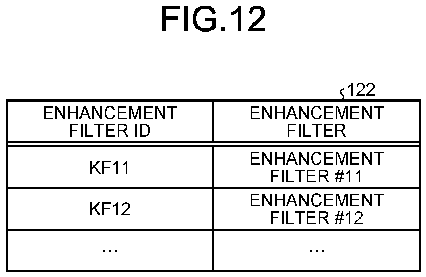

The enhancement filter storage unit 122 stores information related to an enhancement filter to be applied to a medical image. FIG. 12 illustrates an example of the enhancement filter storage unit 122 according to the embodiment. As illustrated in FIG. 12, the enhancement filter storage unit 122 has items such as "enhancement filter ID" and "enhancement filter".

The "enhancement filter ID" indicates identification information for identifying an enhancement filter. The "enhancement filter" indicates information related to the enhancement filter. Although conceptual information such as "enhancement filter #11" and "enhancement filter #12" is stored in the "enhancement filter" in the example illustrated in FIG. 12, for example, the intensity and type of the enhancement filter, and the range of pixels to which the enhancement filter is applied are actually stored.

Control Unit 130

The control unit 130 is a controller, and is implemented by, for example, a CPU or an MPU, by executing various programs stored in a storage device inside the image processing apparatus 100 using a RAM as a work area. The control unit 130 is a controller, and is implemented by, for example, an integrated circuit such as an ASIC or an FPGA.

As illustrated in FIG. 10, the control unit 130 includes an acquisition unit 131, a calculation unit 132, and a determination unit 133, and implements or executes an operation of information processing to be described below. The internal configuration of the control unit 130 is not limited to the configuration illustrated in FIG. 10, and other configurations may be used as long as information processing to be described below is performed.

Acquisition Unit 131

The acquisition unit 131 acquires various types of information. The acquisition unit 131 acquires various types of information from an external information processing apparatus. The acquisition unit 131 acquires various types of information from another information processing apparatus such as the imaging apparatus 10.

The acquisition unit 131 acquires various types of information from the storage unit 120. The acquisition unit 131 acquires various types of information from the medical image storage unit 121 and the enhancement filter storage unit 122.

The acquisition unit 131 stores the acquired various types of information in the storage unit 120. The acquisition unit 131 stores various types of information in the medical image storage unit 121 and the enhancement filter storage unit 122.

The acquisition unit 131 acquires various types of information calculated and determined by other functional configurations.

The acquisition unit 131 acquires a medical image of a subject. For example, the acquisition unit 131 acquires a medical image of a subject captured by the imaging apparatus 10. For example, the acquisition unit 131 acquires a medical image of a subject related to a living body, an organism, a material, or a pathology in the medical field. For example, the acquisition unit 131 acquires a medical image captured by a microscope.

Calculation Unit 132

The calculation unit 132 calculates various types of information. The calculation unit 132 calculates various types of information from the storage unit 120. The calculation unit 132 calculates various types of information from the medical image storage unit 121 and the enhancement filter storage unit 122.

The calculation unit 132 stores the calculated various types of information in the storage unit 120. The calculation unit 132 stores various types of information in the medical image storage unit 121 and the enhancement filter storage unit 122.

The calculation unit 132 calculates various types of information acquired and determined by other functional configurations. The calculation unit 132 calculates various types of information based on various types of information acquired and determined by other functional configurations.

The calculation unit 132 calculates the sum of squared adjacent differences by using the acquired image information. The calculation unit 132 calculates the sum of squared adjacent differences in the determined tap range centered on a predetermined pixel. For example, the calculation unit 132 calculates the sum of squared adjacent differences based on a feature amount obtained by summing differences between a predetermined pixel and adjacent pixels in the medical image.

The calculation unit 132 calculates a Lorentz function from the calculated sum of squared adjacent differences. The calculation unit 132 calculates an approximate value of the Lorenz function from the calculated sum of squared adjacent differences. The calculation unit 132 approximates the calculated sum of squared adjacent differences to a Lorentz function.

The calculation unit 132 calculates the inverse number of the Lorentz function from the calculated Lorentz function. The calculation unit 132 estimates the focusing position from the inverse number of the Lorentz function. The calculation unit 132 estimates the vertex of the inverse number of the Lorentz function as the focusing position.

The calculation unit 132 calculates the degree of focusing. The calculation unit 132 calculates the degree of focusing by using the estimated focusing position. The calculation unit 132 calculates the degree of focusing according to the distance from the estimated focusing position. The calculation unit 132 calculates the degree of focusing according to the distance between the Z value corresponding to the inverse number of the calculated Lorentz function and the estimated focusing position.

Determination Unit 133

The determination unit 133 determines various types of information. The determination unit 133 determines various types of information from the storage unit 120. The determination unit 133 determines various types of information from the medical image storage unit 121 and the enhancement filter storage unit 122.

The determination unit 133 stores the determined various types of information in the storage unit 120. The determination unit 133 stores various types of information in the medical image storage unit 121 and the enhancement filter storage unit 122.

The determination unit 133 determines various types of information acquired and calculated by other functional configurations. The determination unit 133 determines various types of information based on various types of information acquired and calculated by other functional configurations.

The determination unit 133 selects a pixel to which a filter is applied. The determination unit 133 selects a first pixel to which a filter is applied. For example, the determination unit 133 selects a next pixel after a filter is applied to a predetermined pixel. For example, the determination unit 133 selects a pixel to which a filter is applied based on a predetermined algorithm.

The determination unit 133 determines the intensity of the filter to be applied to the medical image according to the calculated degree of focusing. The determination unit 133 determines a combination rate indicating a ratio of combination of medical images according to a plurality of filters having different intensities, according to the calculated degree of focusing. The determination unit 133 selectively determines a plurality of filters to be applied to the medical image according to the calculated degree of focusing.

The determination unit 133 determines the type of filter to be applied to the medical image according to the calculated degree of focusing. The determination unit 133 determines a combination rate indicating a ratio of combination of medical images according to a plurality of filters having different types, according to the calculated degree of focusing.

The determination unit 133 applies the filter of the determined intensity to the medical image. The determination unit 133 applies the filter of the determined type to the medical image.

The determination unit 133 applies the filter of the intensity determined for the plurality of medical images having different Z values to each medical image according to the calculated degree of focusing. The determination unit 133 then determines a combination rate indicating a ratio of combination of each medical image to which the filter is applied according to the calculated degree of focusing. The determination unit 133 then combines each medical image based on the combination rate determined according to the calculated degree of focusing.

The determination unit 133 determines whether a filter has been applied to all pixels. The determination unit 133 determines whether filter processing has been performed on all pixels in the medical image. The determination unit 133 determines whether filter processing has been performed on all pixels included in a predetermined range in the medical image.

7. Flow of Information Processing

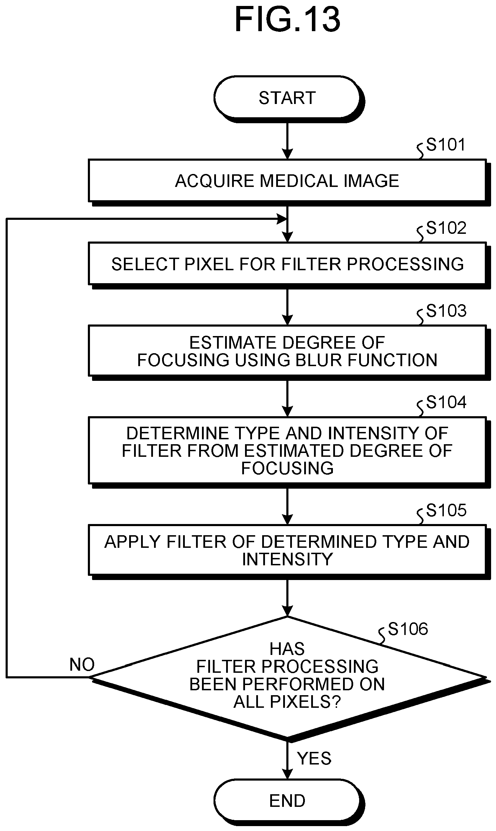

A procedure of information processing by the image processing system 1 according to the embodiment will then be described with reference to FIG. 13. FIG. 13 is a flowchart illustrating a procedure of information processing by the image processing system 1 according to the embodiment.

As illustrated in FIG. 13, the image processing apparatus 100 acquires a medical image (step S101). The image processing apparatus 100 selects a predetermined pixel for performing filter processing (step S102). The image processing apparatus 100 estimates the degree of focusing using the blur function (step S103). The image processing apparatus 100 determines the type and intensity of the filter from the estimated degree of focusing (step S104). The image processing apparatus 100 applies a filter of the determined type and intensity (step S105). The image processing apparatus 100 determines whether filter processing has been performed on all pixels (step S106). If it is determined that filtering processing is not performed on all pixels (step S106; No), the image processing apparatus 100 returns to the process of step S102. For example, the image processing apparatus 100 returns to the process of step S102 and selects pixels other than the previously selected pixels. On the other hand, if it is determined that filtering processing has been performed on all pixels (step S106; Yes), the image processing apparatus 100 ends the information processing.

8. Modifications

The image processing system 1 according to the above-described embodiment may be implemented in various different forms other than the above embodiment.

Therefore, another embodiment of the image processing system 1 will be described below.

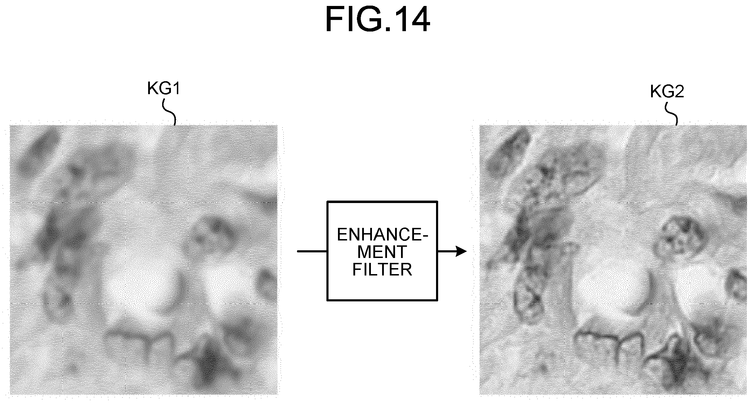

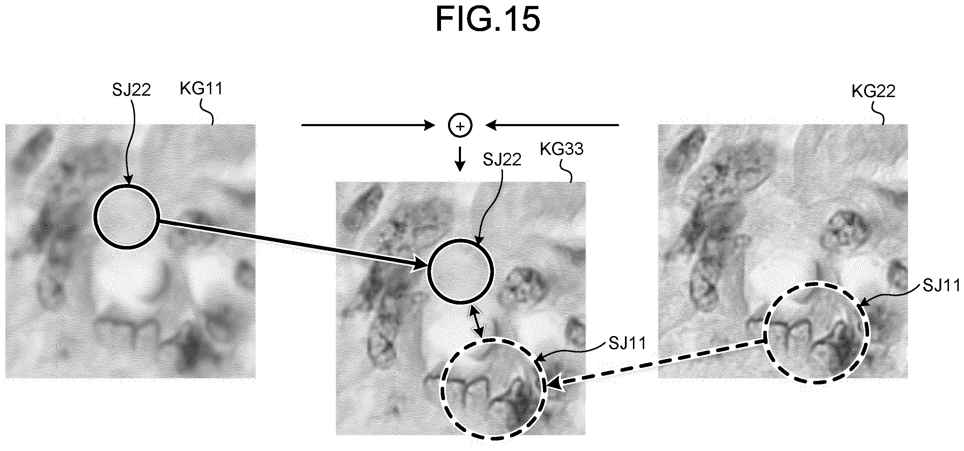

The above embodiment has been described the process of applying an optimal filter to a plurality of medical images having different Z values for each pixel. With reference to FIGS. 14 and 15, a description will be given of a process that can obtain an effect equivalent to the process of applying an optimum filter to a plurality of medical images having different Z values for each pixel.

FIG. 14 illustrates a case where the image processing apparatus 100 applies one enhancement filter to an acquired medical image. In FIG. 14, an image KG1 indicates an image before filter application, and an image KG2 indicates an image after filter application. In this case, an image having improved contrast and resolution of the entire image is generated, including targets other than the target of interest.

The image processing apparatus 100 may apply a plurality of enhancement filters to an acquired medical image. The image processing apparatus 100 may generate a composite image obtained by applying a plurality of filters having different intensities according to the degree of focusing.

FIG. 15 illustrates a case where the image processing apparatus 100 combines images obtained by applying a plurality of enhancement filters to an acquired medical image. In FIG. 15, an image KG11 indicates an image obtained by applying a first filter, and an image KG22 indicates an image obtained by applying a second filter having an intensity different from that of the first filter. As illustrated in FIG. 15, the image KG11 is more blurred than the image KG22. An image KG33 indicates a composite image obtained by combining the image KG11 and the image KG22. In FIG. 15, a target SJ11 is a first region indicating a region of interest of the image, and a target SJ22 is a second region that is not the region of interest. For example, the target SJ22 is a portion of the noise in the medical image.

The image processing apparatus 100 may determine a combination rate indicating a ratio of combination of the medical image. For example, the image processing apparatus 100 may determine a combination rate for the first region and the second region. In FIG. 15, the image processing apparatus 100 combines the image KG11 and the image KG22 at a combination rate of 1:9 with respect to the region of the target SJ11. The ratio of the combination rate to the region of the target SJ11 may be any ratio as long as the ratio of the image KG22 is higher than that of the image KG11. In FIG. 15, the image processing apparatus 100 combines the image KG11 and the image KG22 at a combination rate of 9:1 with respect to the region of the target SJ22. The ratio of the combination rate to the region of the target SJ22 may be any ratio as long as the ratio of the image KG11 is higher than that of the image KG22.

Although two images obtained by applying an enhancement filter are combined in FIG. 15, it is assumed that the number of images to be combined by the image processing apparatus 100 is not limited. The image processing apparatus 100 may selectively determine the number of images to be combined or may selectively determine an image to be combined. For example, when there is a region that cannot be discriminated in an image obtained by applying the first filter, the image processing apparatus 100 selectively combines a plurality of images obtained by applying other filters and an image obtained by applying the first filter, thereby generating an image having improved visibility and identifiability compared to an image obtained by applying only the first filter.

Thus, the image processing apparatus 100 can adjust local contrast by combining the processed images of the enhancement filters having different intensities. Thus, the image processing apparatus 100 can adjust global and local contrasts by adaptively applying an optimal filter, and improve visibility as with an optical microscope.

FIG. 15 illustrates an example of combining images obtained by applying a plurality of different filters to one image. As described above, the image processing apparatus 100 may generate a composite image by combining images obtained by applying a plurality of different filters to one image. As in the above embodiment, the image processing apparatus 100 may generate a composite image by combining, according to the degrees of focusing, images obtained by applying optimal filters to a plurality of medical images having different Z values according to respective degrees of focusing.

9. Hardware Configuration

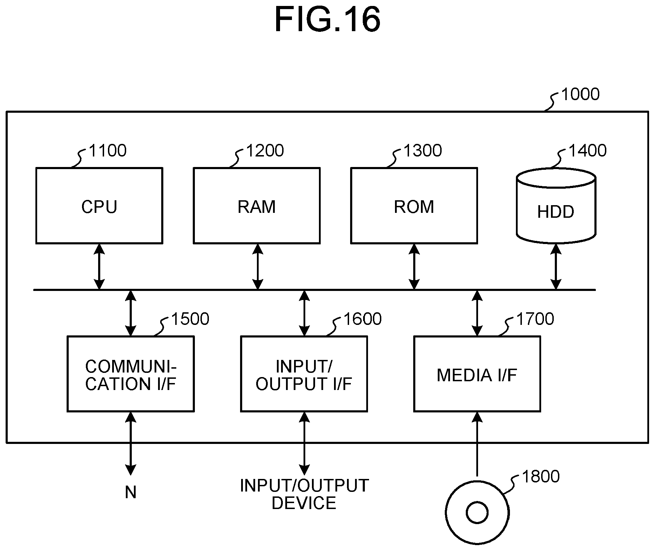

The imaging apparatus 10 and the image processing apparatus 100 according to the above-described embodiment are implemented by, for example, a computer 1000 having a configuration illustrated in FIG. 16. FIG. 16 is a hardware configuration diagram illustrating an example of a computer that implements the functions of the imaging apparatus 10 and the image processing apparatus 100. The computer 1000 includes a CPU 1100, a RAM 1200, a ROM 1300, an HDD 1400, a communication interface (I/F) 1500, an input/output interface (I/F) 1600, and a media interface (I/F) 1700.

The CPU 1100 operates based on a program stored in the ROM 1300 or the HDD 1400, and controls each unit. The ROM 1300 stores a boot program executed by the CPU 1100 when the computer 1000 is activated, and a program dependent on the hardware of the computer 1000, for example.

The HDD 1400 stores programs to be executed by the CPU 1100, and data to be used by the programs, for example. The communication interface 1500 receives data from other devices via a predetermined communication network, transmits the data to the CPU 1100, and transmits the data generated by the CPU 1100 to the other devices via the predetermined communication network.

The CPU 1100 controls an output device such as a display or a printer and an input device such as a keyboard or a mouse, via the input/output interface 1600. The CPU 1100 acquires data from the input device via the input/output interface 1600. The CPU 1100 outputs the generated data to the output device via the input/output interface 1600.

The media interface 1700 reads a program or data stored in a recording medium 1800 and provides the read program or data to the CPU 1100 via the RAM 1200. The CPU 1100 loads the program onto the RAM 1200 from the recording medium 1800 via the media interface 1700 and executes the loaded program. The recording medium 1800 is, for example, an optical recording medium such as a digital versatile disc (DVD) or a phase change rewritable disk (PD), a magneto-optical recording medium such as a magneto-optical disk (MO), a tape medium, a magnetic recording medium, or a semiconductor memory.

For example, when the computer 1000 functions as the imaging apparatus 10 and the image processing apparatus 100 according to the embodiment, the CPU 1100 of the computer 1000 executes a program loaded onto the RAM 1200 to implement the functions of the control units 13 and 130. The CPU 1100 of the computer 1000 reads these programs from the recording medium 1800 and executes the programs, but as another example, these programs may be acquired from another device via a predetermined communication network.

10. Others

Among the processes described in the above embodiments and modifications, all or some of the processes described as being automatically performed may be manually performed, or all or some of the processes described as being manually performed may be automatically performed by a known method. In addition, the processing procedures, specific names, and information including various types of data and parameters illustrated in the above description and drawings can be arbitrarily changed unless otherwise specified. For example, various types of information illustrated in each drawing are not limited to the illustrated information.

Each component of each device illustrated in the drawings is functionally conceptual, and does not necessarily need to be physically configured as illustrated in the drawings. In other words, specific forms of distribution and integration of the devices are not limited to those illustrated in the drawings, and all or some of the devices may be configured by being functionally or physically distributed or integrated in arbitrary units according to, for example, various loads or usage conditions.

The above-described embodiments and modifications can be appropriately combined within a range that does not contradict the processing contents.

Although some embodiments of the present application have been described in detail with reference to the drawings, these embodiments are merely examples, and the present invention can be practiced in other forms in which various modifications and improvements are made based on the knowledge of those skilled in the art, including the aspects described in the disclosure of the invention.

The above-described "portion (section, module, and unit)" can be replaced with a "means" or a "circuit", for example. For example, the acquisition unit can be replaced with an acquisition means or an acquisition circuit.

Note that the present technique may also have the following configuration.

(1) An image processing method, by a computer, including:

acquiring a medical image captured by an imaging apparatus; and
determining an intensity of a filter to be applied to the medical image according to a degree of focusing of the medical image.

(2) The image processing method according to (1), including
determining an intensity of a filter to be applied to the medical image according to the degree of focusing calculated by a blur function indicating a degree of blur of the medical image.
(3) The image processing method according to (1) or (2), including
determining an intensity of a filter to be applied to the medical image according to the degree of focusing calculated by the blur function according to a thickness direction of the subject in a direction perpendicular to the medical image.
(4) The image processing method according to any one of (1) to (3), including
determining an intensity of a filter to be applied to the medical image according to the degree of focusing calculated by a feature amount obtained by summing differences between a predetermined pixel and peripheral pixels in the medical image.
(5) The image processing method according to any one of (1) to (4), including
determining an intensity of a filter to be applied to the medical image based on an estimated degree of focusing estimated based on the blur function and the degree of focusing calculated by the feature amount obtained by summing differences between a predetermined pixel and peripheral pixels in the medical image.
(6) The image processing method according to any one of (1) to (5), including
determining a combination rate indicating a ratio of combination of a composite image generated by applying a plurality of different filters to the medical image according to a degree of focusing of the subject.
(7) The image processing method according to any one of (1) to (6), including
determining the combination rate of the composite image generated by applying a plurality of filters having different intensities to the predetermined medical image.
(8) The image processing method according to any one of (1) to (7), including
determining the combination rate of the composite image generated by applying a filter according to a degree of focusing of the subject to a plurality of the medical images having different Z values.
(9) The image processing method according to any one of (1) to (8), including

selectively determining the plurality of filters to be applied to the medical image for generating the composite image according to a degree of focusing of the subject.

(10) The image processing method according to any one of (1) to (9), including determining a high-range enhancement filter, a mid-range enhancement filter, a low-range enhancement filter, or a negative enhancement filter, that is, a smoothing filter as a type of a region enhanced by the filter according to a degree of focusing of the subject.

(11) The image processing method according to any one of (1) to (10), including acquiring the medical image of a subject related to a living body, an organism, a material, or a pathology in a medical field.

(12) The image processing method according to any one of (1) to (11), including acquiring the medical image captured by a microscope as the imaging apparatus.

(13) An image processing apparatus including:

an acquisition unit configured to acquire a medical image of a subject captured by a microscope; and
a determination unit configured to determine an intensity of a filter to be applied to the medical image according to a degree of focusing of the subject, the filter improving image quality of the medical image.

(14) An image processing system including:

an imaging apparatus configured to image a subject; and
an image processing apparatus configured to include software used for processing a medical image corresponding to a target to be imaged by the imaging apparatus,
in which the software determines an intensity of a filter to be applied to a medical image captured by the imaging apparatus according to a degree of focusing of the subject.

Reference Signs List

| 1 | IMAGE PROCESSING SYSTEM |
| 10 | IMAGING APPARATUS |
| 100 | IMAGE PROCESSING APPARATUS |
| 110 | COMMUNICATION UNIT |
| 120 | STORAGE UNIT |
| 121 | MEDICAL IMAGE STORAGE UNIT |
| 122 | ENHANCEMENT FILTER STORAGE UNIT |
| 130 | CONTROL UNIT |
| 131 | ACQUISITION UNIT |
| 132 | CALCULATION UNIT |
| 133 | DETERMINATION UNIT |
| N | NETWORK |

**Claims**

1. An image processing method, by a computer, comprising:

acquiring a medical image captured by an imaging apparatus; and
determining an intensity of a filter to be applied to the medical image according to a degree of focusing of the medical image.

2. The image processing method according to claim 1, comprising
determining an intensity of a filter to be applied to the medical image according to the degree of focusing calculated by a blur function indicating a degree of blur of the medical image.

3. The image processing method according to claim 2, comprising
determining an intensity of a filter to be applied to the medical image according to the degree of focusing calculated by the blur function according to a thickness direction of a subject in a direction perpendicular to the medical image.

**4.** The image processing method according to claim 3, comprising
determining an intensity of a filter to be applied to the medical image according to the degree of focusing calculated by a feature amount obtained by summing differences between a predetermined pixel and peripheral pixels in the medical image.

**5.** The image processing method according to claim 4, comprising
determining an intensity of a filter to be applied to the medical image based on an estimated degree of focusing estimated based on the blur function and the degree of focusing calculated by the feature amount obtained by summing differences between a predetermined pixel and peripheral pixels in the medical image.

**6.** The image processing method according to claim 5, comprising
determining a combination rate indicating a ratio of combination of a composite image generated by applying a plurality of different filters to the medical image according to a degree of focusing of the subject.

**7.** The image processing method according to claim 6, comprising
determining the combination rate of the composite image generated by applying a plurality of filters having different intensities to the predetermined medical image.

**8.** The image processing method according to claim 6, comprising
determining the combination rate of the composite image generated by applying a filter according to a degree of focusing of the subject to a plurality of the medical images having different Z values.

**9.** The image processing method according to claim 6, comprising
selectively determining the plurality of filters to be applied to the medical image for generating the composite image according to a degree of focusing of the subject.

**10.** The image processing method according to claim 9, comprising
determining a high-range enhancement filter, a mid-range enhancement filter, a low-range enhancement filter, or a negative enhancement filter, that is, a smoothing filter as a type of a region enhanced by the filter according to a degree of focusing of the subject.

**11.** The image processing method according to claim 10, comprising
acquiring the medical image of a subject related to a living body, an organism, a material, or a pathology in a medical field.

**12.** The image processing method according to claim 11, comprising
acquiring the medical image captured by a microscope as the imaging apparatus.

**13.** An image processing apparatus comprising:

an acquisition unit configured to acquire a medical image of a subject captured by a microscope; and
a determination unit configured to determine an intensity of a filter to be applied to the medical image according to a degree of focusing of the subject, the filter improving image quality of the medical image.

**14.** An image processing system comprising:

an imaging apparatus configured to image a subject; and
an image processing apparatus configured to include software used for processing a medical image corresponding to a target to be imaged by the imaging apparatus,
wherein the software determines an intensity of a filter to be applied to a medical image captured by the imaging apparatus according to a degree of focusing of the subject.

# FIG.1

| | OPTICAL MICROSCOPE | DIGITAL MICROSCOPE |
|---|---|---|
| CHARACTERISTIC 1 | STEREOSCOPIC | PLANAR |
| CHARACTERISTIC 2 | HAVING FEELING OF TRANSPARENCY | DULL |
| CHARACTERISTIC 3 | DISTINCT | BLURRED |
| CHARACTERISTIC 4 | TARGET IDENTIFICATION PERFORMANCE: HIGH | TARGET IDENTIFICATION PERFORMANCE: LOW |
| CHARACTERISTIC 5 | DETAIL RECOGNITION PERFORMANCE: HIGH | DETAIL RECOGNITION PERFORMANCE: LOW |

# FIG.2

MACROPHAGE ETC.

LYMPHOCYTE ETC.

COVER GLASS

NON-FOCAL PLANE

FOCAL PLANE

NON-FOCAL PLANE

SLIDE GLASS

TISSUE

LYMPHOCYTE ETC.

EP 4 047 408 A1

# FIG.3

1

| IMAGE PROCESSING APPARATUS | 100 | N | 10 | IMAGING APPARATUS |

IMAGE PROCESSING APPARATUS — 100

N

IMAGING APPARATUS — 10

# FIG.4

GR1

Distribution of Figure

$s(z)$

z

# FIG.5

Distribution of Figure

GR2

# FIG.6

# FIG.7

GR3

$F(z)^{-1} = ax^2 + bx + c$

# FIG.8

TA2

# FIG.9

IMAGING APPARATUS ~10

COMMU-NICATION UNIT ~11

CONTROL UNIT ~13

IMAGING UNIT ~141

STORAGE UNIT ~12

# FIG.10

IMAGE PROCESSING APPARATUS ⌐100

COMMU-NICATION UNIT ⌐110

CONTROL UNIT ⌐130

ACQUISITION UNIT ⌐131

CALCULATION UNIT ⌐132

DETERMINATION UNIT ⌐133

STORAGE UNIT ⌐120

MEDICAL IMAGE STORAGE UNIT ⌐121

ENHANCEMENT FILTER STORAGE UNIT ⌐122

# FIG.11

⌐121

| MEDICAL IMAGE ID | MEDICAL IMAGE |
|---|---|
| PP11 | MEDICAL IMAGE #11 |
| PP12 | MEDICAL IMAGE #12 |
| … | … |

# FIG.12

| ENHANCEMENT FILTER ID | ENHANCEMENT FILTER |
|---|---|
| KF11 | ENHANCEMENT FILTER #11 |
| KF12 | ENHANCEMENT FILTER #12 |
| … | … |

122

# FIG.13

```
                    ┌─────────────┐
                    │    START    │
                    └──────┬──────┘
                           │
                           ▼              ⌇S101
        ┌──────────────────────────────────────┐
        │        ACQUIRE MEDICAL IMAGE          │
        └──────────────────┬───────────────────┘
        │                  │
        │                  ▼              ⌇S102
        │  ┌──────────────────────────────────────┐
        │  │    SELECT PIXEL FOR FILTER PROCESSING │
        │  └──────────────────┬───────────────────┘
        │                     │
        │                     ▼              ⌇S103
        │  ┌──────────────────────────────────────┐
        │  │         ESTIMATE DEGREE OF            │
        │  │   FOCUSING USING BLUR FUNCTION        │
        │  └──────────────────┬───────────────────┘
        │                     │
        │                     ▼              ⌇S104
        │  ┌──────────────────────────────────────┐
        │  │  DETERMINE TYPE AND INTENSITY OF      │
        │  │  FILTER FROM ESTIMATED DEGREE OF      │
        │  │             FOCUSING                  │
        │  └──────────────────┬───────────────────┘
        │                     │
        │                     ▼              ⌇S105
        │  ┌──────────────────────────────────────┐
        │  │  APPLY FILTER OF DETERMINED TYPE AND  │
        │  │             INTENSITY                 │
        │  └──────────────────┬───────────────────┘
        │                     │
        │                     ▼              ⌇S106
        │              ◇─────────────◇
        │   NO        ╱      HAS       ╲
        └───────────◇  FILTER PROCESSING ◇
                     ╲  BEEN PERFORMED ON ╱
                      ◇    ALL PIXELS?  ◇
                       ◇───────┬───────◇
                               │ YES
                               ▼
                        ┌─────────────┐
                        │     END     │
                        └─────────────┘
```

# FIG.14

EP 4 047 408 A1

# FIG.15

EP 4 047 408 A1

# FIG.16

CPU 1100

RAM 1200

ROM 1300

HDD 1400

COMMUNI-CATION I/F 1500

INPUT/OUTPUT I/F 1600

MEDIA I/F 1700

N

INPUT/OUTPUT DEVICE

1800

1000

**INTERNATIONAL SEARCH REPORT**

| International application No. |
| --- |
| PCT/JP2020/037068 |

A.  CLASSIFICATION OF SUBJECT MATTER
Int. Cl. G02B21/36(2006.01)i, G02B7/36(2021.01)i, G06T5/00(2006.01)i
FI: G02B21/36, G02B7/36, G06T5/00 700

According to International Patent Classification (IPC) or to both national classification and IPC

B.  FIELDS SEARCHED

Minimum documentation searched (classification system followed by classification symbols)
Int. Cl. G02B21/36, G02B7/36, G06T5/00

Documentation searched other than minimum documentation to the extent that such documents are included in the fields searched
Published examined utility model applications of Japan    1922-1996
Published unexamined utility model applications of Japan    1971-2020
Registered utility model specifications of Japan    1996-2020
Published registered utility model applications of Japan    1994-2020

Electronic data base consulted during the international search (name of data base and, where practicable, search terms used)

C.  DOCUMENTS CONSIDERED TO BE RELEVANT

| Category* | Citation of document, with indication, where appropriate, of the relevant passages | Relevant to claim No. |
| --- | --- | --- |
| Y<br>A | JP 2019-149719 A (CANON INC.) 05 September 2019, claims 5-7, paragraphs [0051]-[0055], claims 5-7, paragraphs [0051]-[0055] | 1-5, 13, 14<br>6-12 |
| Y<br>A | JP 2017-158764 A (SONY CORP.) 14 September 2017, paragraphs [0051], [0093], [0133], paragraphs [0051], [0093], [0133] | 1-5, 13, 14<br>6-12 |
| Y | JP 59-94712 A (OLYMPUS OPTICAL CO., LTD.) 31 May 1984, description, p. 2, lower right column, line 11 to p. 3, lower left column, line 8 | 2-5 |
| Y | JP 2019-114250 A (NIKON CORP.) 11 July 2019, paragraphs [0095]-[0116] | 2-5 |

☒  Further documents are listed in the continuation of Box C.   ☒  See patent family annex.

| * | Special categories of cited documents: | "T" | later document published after the international filing date or priority date and not in conflict with the application but cited to understand the principle or theory underlying the invention |
| --- | --- | --- | --- |
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
| --- | --- |
| 08.12.2020 | 22.12.2020 |

| Name and mailing address of the ISA/<br>    Japan Patent Office<br>    3-4-3, Kasumigaseki, Chiyoda-ku,<br>    Tokyo 100-8915, Japan | Authorized officer<br><br><br>Telephone No. |
| --- | --- |

Form PCT/ISA/210 (second sheet) (January 2015)

**INTERNATIONAL SEARCH REPORT**

| International application No. |
| --- |
| PCT/JP2020/037068 |

C (Continuation). DOCUMENTS CONSIDERED TO BE RELEVANT

| Category* | Citation of document, with indication, where appropriate, of the relevant passages | Relevant to claim No. |
| --- | --- | --- |
| Y | JP 2011-90221 A (SONY CORP.) 06 May 2011, paragraph [0042] | 4, 5 |
| Y | JP 10-243289 A (OLYMPUS OPTICAL CO., LTD.) 11 September 1998, paragraph [0024] | 4, 5 |

Form PCT/ISA/210 (continuation of second sheet) (January 2015)

INTERNATIONAL SEARCH REPORT

Information on patent family members

International application No.

PCT/JP2020/037068

| Patent Documents referred to in the Report | Publication Date | Patent Family | Publication Date |
|---|---|---|---|
| JP 2019-149719 A | 05.09.2019 | (Family: none) | |
| JP 2017-158764 A | 14.09.2017 | US 2019/0328208 A1 paragraphs [0081], [0119], [0159] WO 2017/154434 A1 EP 3426127 A1 CN 108697308 A | |
| JP 59-94712 A | 31.05.1984 | (Family: none) | |
| JP 2019-114250 A | 11.07.2019 | (Family: none) | |
| JP 2011-90221 A | 06.05.2011 | (Family: none) | |
| JP 10-243289 A | 11.09.1998 | (Family: none) | |

Form PCT/ISA/210 (patent family annex) (January 2015)

**REFERENCES CITED IN THE DESCRIPTION**

**Patent documents cited in the description**

- JP 2011197283 A